## Europäisches Patentamt

## European Patent Office

## Office européen des brevets

(11) Publication number: **0 079 216**
**B1**

## EUROPEAN PATENT SPECIFICATION

(45) Date of publication of patent specification: **27.05.87**

(21) Application number: **82305901.9**

(22) Date of filing: **05.11.82**

(51) Int. Cl.⁴: **F 01 D 9/04,** F 02 K 3/06, F 02 C 7/05

(54) A stator vane assembly for a turbine machine.

(30) Priority: **09.11.81 US 319829**

(43) Date of publication of application:
**18.05.83 Bulletin 83/20**

(45) Publication of the grant of the patent:
**27.05.87 Bulletin 87/22**

(84) Designated Contracting States:
**DE FR GB**

(56) References cited:
**FR-A-2 073 239**
**GB-A- 802 508**
**GB-A-1 137 479**

(73) Proprietor: **THE GARRETT CORPORATION**
**9851-9951 Sepulveda Boulevard P.O. Box 92248**
**Los Angeles, California 90009 (US)**

(72) Inventor: **Conant, Ronald G.**
**818, West Oregan**
**Phoenix Arizona 85013 (US)**
Inventor: **Veasey, Larry T.**
**3429 West Augusta Avenue**
**Phoeniz Arizona 85021 (US)**

(74) Representative: **Arthur, George Fitzgerald et al**
**KILBURN & STRODE 30, John Street**
**London WC1N 2DD (GB)**

Courier Press, Leamington Spa, England.

## Description

The present invention relates generally to turbine machines, and more particularly to an improved inlet stator vane assembly for use in a turbofan jet engine.

In a typical turbofan engine a core engine is used to drive an axial flow fan which draws ambient air into a main, annular inlet passage, and forces the air through an annular stator vane assembly spanning the inlet passage. The stator vane assembly has a set of circumferentially spaced generally radially extending airfoil-shape vanes which are connected between annular inner and outer support shrouds. Inlet air traversing the stator vanes is flow-straightened in the usual manner and then directed into co-axial annular outer bypass and inner core flow passages having entrances immediately downstream of the stator vane assembly. Further downstream, the bypass and core flow passages respectively communicate with atmosphere and with the inlet to the core engine.

The stator vane assembly is particularly vulnerable to damage caused by birds or other sizeable objects ingested into the main inlet passage during engine operation, such objects having imparted thereto a very high tangential velocity component by the inlet fan. Damage to conventional stator vane assemblies, in turn, can adversely affect subsequent engine performance to an unacceptable degree in one or more of the three following ways.

Perhaps the most serious potential result of stator damage is the breaking away of shattering of one or more vanes or part of the shroud structure, since the torn pieces can be ingested into the core engine which can, of course, seriously damage the many rotating components within the core engine. Another possible form of subsequent engine power loss arising from the stator assembly damage is the blockage or obstruction of the core flow passage by deformed vanes and/or support shroud structure. Finally, because of the high tangential velocity component of ingested objects, the potential exists for a single ingested object to cause vane damage around a considerable circumferential portion of the stator vane assembly, drastically reducing the intended flow-straightening capability of the assembly and thus also causing considerable engine power loss.

In the past, a variety of techniques have been employed in an attempt to produce a stator vane assembly which minimizes engine power loss after the vane assembly has been struck by an ingested object. None of the resulting vane assemblies has proved entirely satisfactory in this regard. One conventional stator assembly utilizes rigid solid cast metal vanes to limit vane deformation and the total circumferential extent of vane damage. However, this adds weight to the engine and also increases the chance that one or more vanes will be shattered by ingested objects and drawn into the core engine.

Another approach has been to use bendable vanes fixedly secured between the support shrouds. While this construction tends to solve the vane-shattering problem, the violent bending of the vanes often deforms the inner support shroud, causing blockage of the core flow passage. Additionally, severe bending of the impacted vanes can tip them loose from their support shrouds, sending one or more entire vanes through the core engine.

In Rolls Royce's British Patent specification GB—A 802508, there is a disclosure of a stator blade ring in which the outer ends of the blades pass through slots in a shroud and spacers are welded to the shroud and to the ends of the blades while flanges around the shroud slots add to the stiffness of the structure. The components are welded together to form a rigid load transmitting structure, but there is no consideration of the applicant's problem of protecting against the likely damage mentioned above.

Minister of Technology's British Patent specification no. 1137479 does deal with the problem of protecting an air intake from damage due to striking large birds and there is the mere suggestion of the inclusion of a weak link so that one end of a vane forming part of a guard is readily detachable from its frame.

According to the present invention there is provided a stator vane assembly which comprises vane support means having openings through each of which an end portion of a stator vane extends, retaining means each attached to the support means and to the projecting end portion of a stator vane; the retaining means having a first portion secured to the support means by a first attachment, a second portion having an end aligned with an secured to the projecting end portion of the stator vane by a second attachment, and a curved portion interconnecting the first and second portions, the assembly being characterised in that the retaining means is resiliently flexible and the curved portion has a radius of curvature large in relation to its thickness. Withdrawal of the projecting end portion of the vane through the opening is in consequence by deformation of the retaining means resulting in bending stress on and breakage of the second attachment as the projecting end portion of the vane is withdrawn through the opening, the first attachment means being subjected primarily to shear stress and being substantially undamaged thereby.

In a preferred embodiment of the invention, the assembly is annularly shaped and is used as the single span inlet stator vane array in the main inlet passage of a turbofan jet engine. The described cooperation between the bendable vanes and their deformable inner end retaining members uniquely functions, in this particular application of the invention, to maintain an acceptable level of engine performance subsequent to the striking of the vane assembly by birds or other engine-ingested objects by limiting the circumferential extent of inlet vane damage and by helping to prevent damaged vane structure from being drawn through the core flow passage of the engine or blocking such core passage.

The invention can be put into practice in many different ways, but one embodiment of the invention will now be more particularly described, by way of example, with reference to the accompanying drawings, in which:

Figure 1 is a cross-sectional view taken through one half of a forward portion of a turbofan jet engine having an inlet stator vane assembly formed according to the principles of the present invention;

Figure 2 is an enlarged, partially broken away view of the area enclosed within the broken outline identified by the reference numeral 2 in Figure 1, illustrating in greater detail the vane assembly and adjacent engine structure;

Figure 3 is a fragmentary cross-sectional view through the stator vane assembly taken along the line 3—3 of Figure 2 but on an enlarged scale;

Figure 4 is a bottom view of the stator vane assembly, partially in plan and partially in cross-section, taken along the line 4—4 of Figure 3 but illustrated on a reduced scale;

Figure 5 is a fragmentary cross-sectional view through the stator vane assembly taken along the line 5—5 of Figure 3;

Figures 6 and 7 are perspective views, on an enlarged scale, of specially designed vane retaining clips suitable for use with the stator vane assembly of the present invention; and

Figures 8 and 9 are simplified schematic views, taken from a viewpoint upstream of a portion of the stator vane assembly, and sequentially depict the damage-limiting cooperation between the stator vanes and the vane retaining clips thereof when one of the vanes is struck by an object ingested by the engine.

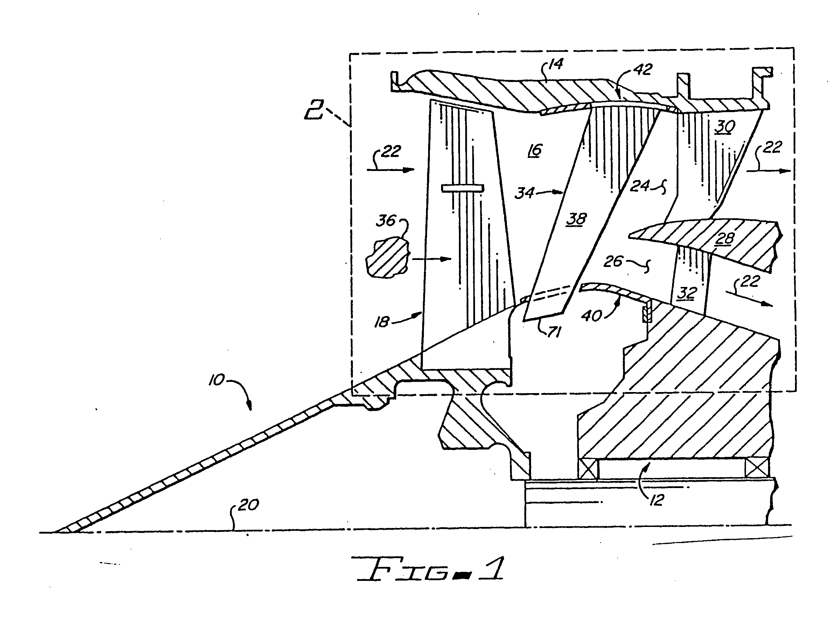

Referring now to the drawings, and particularly to Figure 1 thereof, a forward portion of a turbofan jet engine 10 has a core 12 which is located centrally within an opening in an inlet housing 14 which defines with the core portion an annular inlet passage 16 to receive inlet air coming from the left as viewed in Figure 1. The turbofan jet engine 10 has a centre line 20 and positioned in the inlet passage 16 adjacent its open left end is an axial flow inlet fan assembly 18, which during operation of the engine, is driven to rotate about the centre line 20 by a core engine section (not shown) of the turbofan engine 10. Rotation of the inlet fan 18 draws ambient air 22 into the inlet passage 16 and forces it into two coaxial annular passages, namely a radially outer bypass passage 24 and a radially inner core flow passage 26 positioned downstream of the fan 18 and communicating at their entrances with the annular inlet passage 16. These annular passages 24, 26 are separated by an annular splitter member 28 which is supported between the core structure 12 and the inlet housing 14 by two sets of circumferentially spaced struts, namely a radially outer set of support struts 30 and a radially inner set of support struts 32. Air directed into the bypass passage 24 is discharged to atmosphere, while air directed into the core flow passage 26 passes into the inlet of the core engine which drives the inlet fan 18.

Interposed between the inlet fan 18 and the entrances to the two annular flow passages 24, 26 and extending radially across the whole of the inlet passage 16, is an annular inlet stator vane assembly 34. As will be seen, the stator vane assembly 34 offers substantial structural and operational improvements over conventional stator vane assemblies, particularly by reducing the risk of substantial engine power loss cause by the ingestion into the inlet passages 16 of birds or other foreign bodies 36, which upon ingestion strike and damage the stator vane structure.

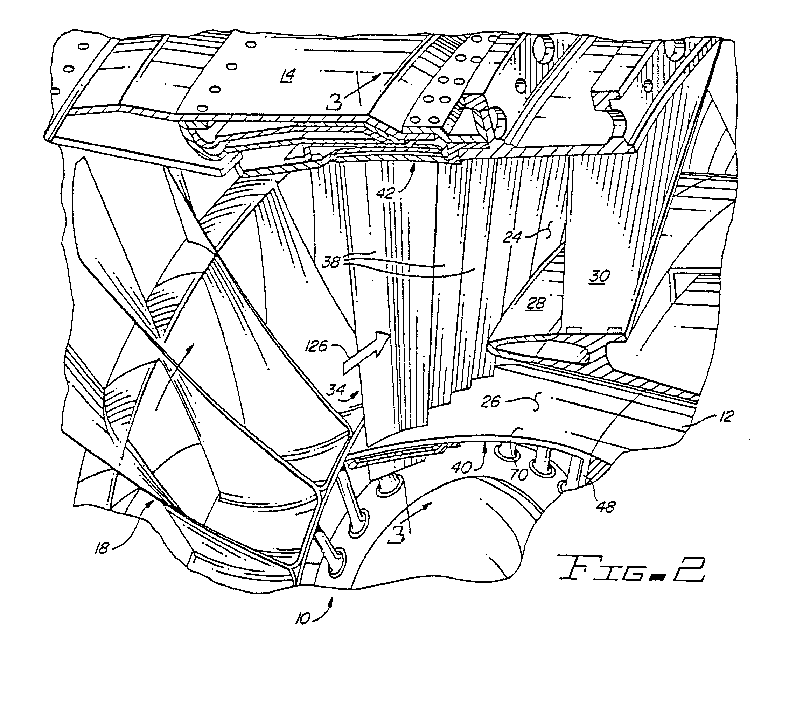

Referring now particularly to Figures 1 and 2, the stator vane assembly 34 comprises a circumferentially spaced set of stator vanes 38 which extend generally radially between coaxial annular inner and outer circular support or shroud assemblies 40, 42 to which the opposite ends of the stator vanes are secured in a manner which will be described in detail below. The shroud assemblies 40, 42 are suitably anchored to the core structure 12 and to the inlet housing 14, respectively, and define an annular, generally axially extending portion of the inner surface of the inlet passage 16. As can best be seen in Figure 1, the radially inner ends of the stator vanes 38 are axially in advance of the radially outer ends thereof so that the stator vanes 38 are inclined forwardly, radially inwardly across the inlet passage 16 from their juncture with the outer shroud assembly 42. Each of the vanes 38 has, along the whole of its length, an airfoil-shape in cross-section so that inlet air forced rearwardly by the fan, and which thus acquires a circumferential component, passes through the spaces between adjacent stator vanes and has the circumferential component substantially removed thereby, that is it is axially flow-straightened in a manner known per se prior to its entry into the coaxial annular passages 24, 26 immediately downstream of the stator assembly 34.

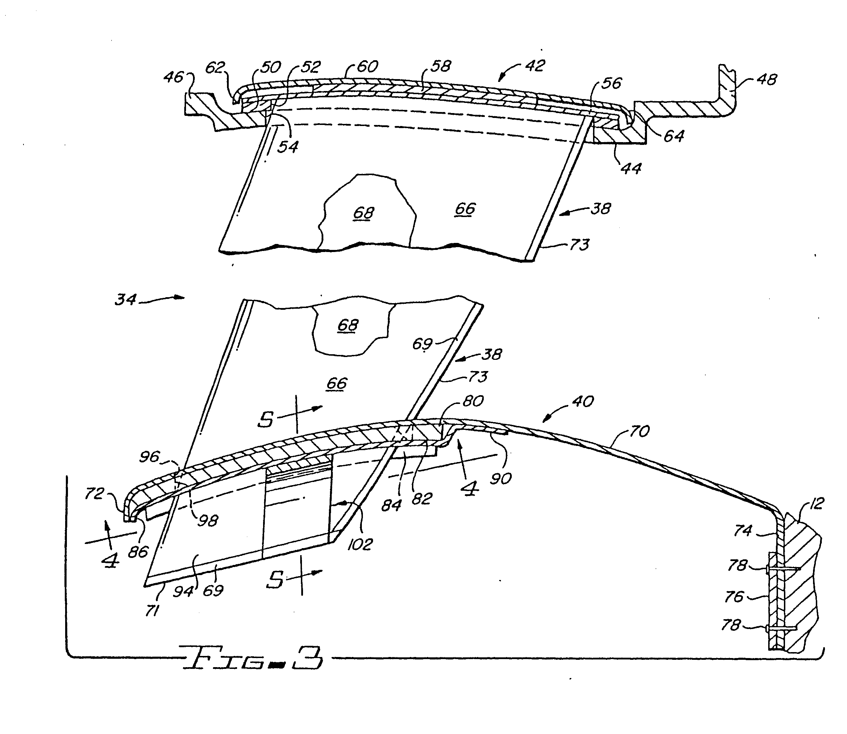

The outer shroud assembly 42 shown in cross-section in Figure 3, includes an annular metal shroud or support member 44 having lipped forward and rear end portions 46, 48 which are used to anchor the shroud 44 fore and aft to the inlet housing 14. Wrapped around the outside shroud 44 and lying between its opposite end portions 46, 48 is a strip 50 of resilient material such as rubber or neoprene having circumferentially spaced slots 52. The stator vanes 38 extend through these circumferentially spaced slots 52, which are aligned with similar slots 54 in the outer shroud 44, the slots 54 being slightly wider than the slots 52, which latter snugly receive those portions of the vanes which extend therethrough.

Each of the vanes 38 has a base portion 56 at its radially outer end, to which is secured a metal stiffening member 58. The base portions 56 overlie the resilient strip 50 and are substantially wider than the slots 54, so that the outer ends of the vanes are held against inward movement through the shroud 44. The vanes 38 are clamped at their outer ends to the shroud 44, and thus essentially fixedly secured thereto, by means of an annular metal clamping band 60 which surrounds the stator assembly and bears inwardly against the stiffening members 58 at the radially outer ends of the vanes. At its axially opposite ends, the band 60 has inwardly turned lips 62, 64 which overlie the front and rear edges of the base portions 56 of the vanes and restrain the band 60 against appreciable axial movement relative to the outer shroud 44. The above described connection of the vanes to the shroud permits limited transverse movement of the vanes relative to the shroud 44 so that vane vibration is absorbed by the resilient strip 50.

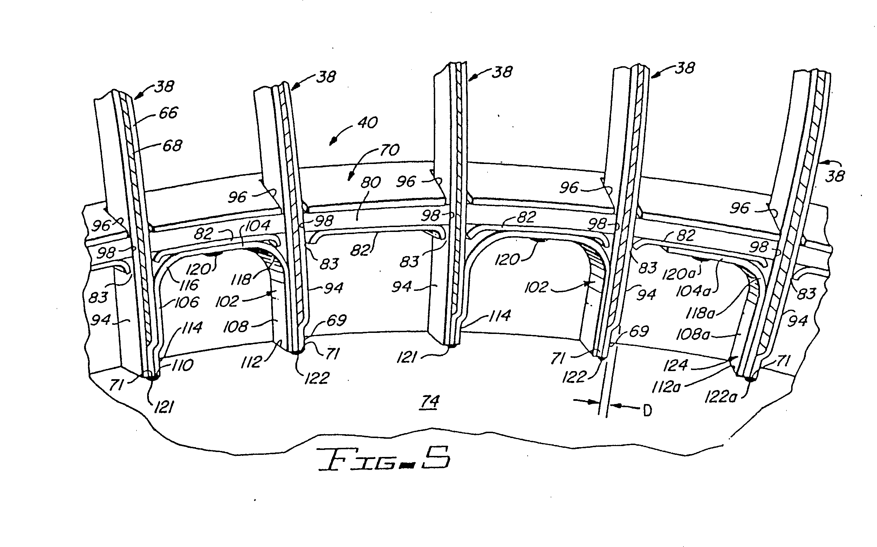

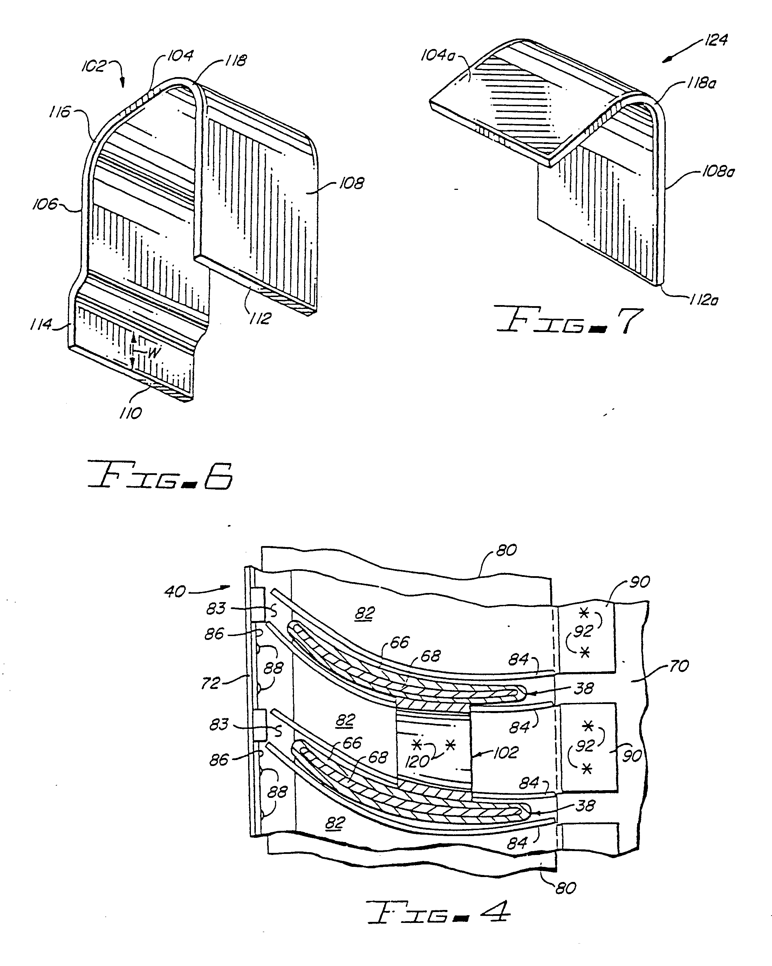

Each of the vanes 38 has a bendable, hollow sheet metal body 66 which is filled with flexible, energy-absorbing and vibration-damping core material 68 such as expanded urethane foam. To retain the core material 68 in the body of the vane 60 the radially inner end and the trailing edge (that is the edge on the right hand side as viewed in Figure 3) are closed by crimping, one of the sidewalls of the vane body to the other sidewall, and then welding the flange 69 thus formed which extends along the radially inner end 71 and the trailing edge 73 of the vane as can be seen in Figures 3 and 5.

The radially inner shroud assembly 40 comprises an annular sheet metal shroud or support member 70 which is somewhat wider than the outer shroud 44 and is radially outwardly convex. At the forward end of the shroud member 70 is a small, radially inwardly directed circumferential lip 72, while at the rear end of the shroud member 70 there is formed a much wider, radially inwardly directed support flange 74 which has secured thereto an annular reinforcing ring 76. The reinforced flange 74 is secured to the core structure 12 by means of suitable fastening members 78, thereby supporting the inner shroud assembly 40 from the rear edge as can be seen in Figure 3.

An annular strip 80 of resilient material similar to that of the strip 50 is retained against the circumferential lip 72 of the shroud member 70 and the radially inner surface of the shroud member 70 by a series of elongate sheet metal fastening strips 82 (Figures 4 and 5). The fastening strips 82 extend lengthwise generally axially of the shroud 70 and are spaced around its circumference, thereby defining a gap 83 (see Figure 4) between each adjacent pair of strips 82. Each edge of each fastening strip 82 has a longitudinal curvature substantially corresponding to the curvature of the stator vanes 38 adjacent their inner ends as can be seen in Figure 4, and has formed thereon along its length a radially inwardly directed stiffening flange 84. At the forward end of each fastening strip 82 is a small, radially inwardly directed attachment lip 86 which is secured by spot welds 88 (see Figure 4) to the lip 72 at the forward end of the shroud 70. A rear end portion 90 of each fastening strip 82 is offset toward the shroud 70 and secured to the inner surface of the shroud 70 by spot welds 92.

To connect the stator vanes 38 to the inner shroud assembly 40, the radially inner ends 94 of the stator vanes 38 are inserted radially inwardly through appropriately curved, aligned slots 96, 98 which are formed in the shroud member 70 and the resilient strip 80 respectively and positioned directly over each of the curved gaps 83 between adjacent pairs of the stiffening flanges 84. The slots 96 are slightly longer and wider than the corresponding cross-sectional dimensions of that part of the vane which extends therethrough, while the slots 98 are dimensioned to receive this part of the vane snugly (see Figure 5).

The radially inner end portions 94 of the stator vanes 38 extend inwardly through the gaps 83 (which are slightly wider than these vane portions) with the radially inner ends 71 of the vanes located radially inwardly of the stiffening flanges 84 as can be seen in Figure 3. The relative dimensions of the slots 96, 98 and the gaps 83 permit limited transverse movement of the radially inner end portions 94 of the vanes between the adjacent pairs of stiffening flanges 84 and the lateral surfaces of the slots 96. Such transverse vane movement is resiliently resisted by the strip 80 which thus functions, like the outer resilient strip 50, to absorb vane vibration.

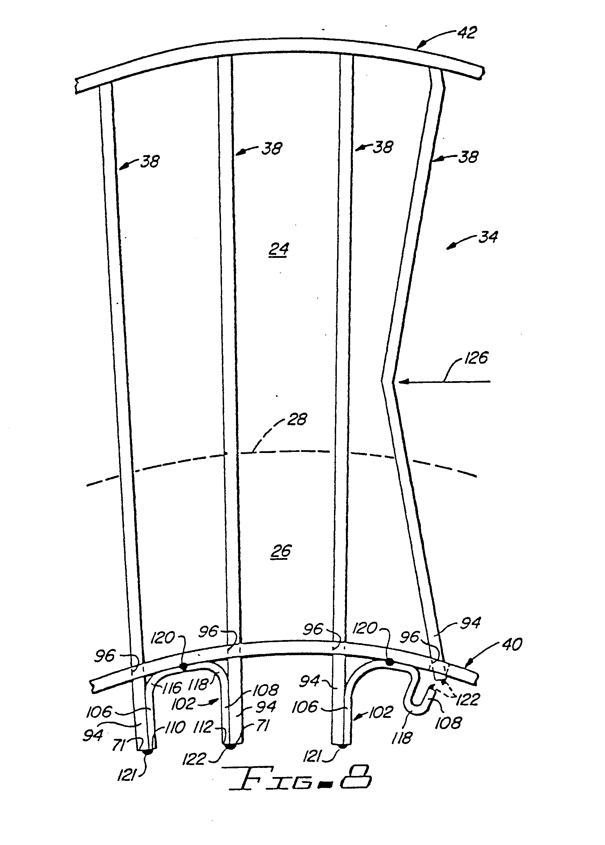

The stator vanes 38 are resiliently and releasably retained in the inner shroud assembly 40, with a predetermined radial retention force which is significantly less than that of the above described connection structure for the radially outer ends of the vanes, by means of specially designed, generally U-shape retainer clips 102, one of which is illustrated in perspective in Figure 6.

Each retainer clip 102 is formed from a strip of sheet metal and has a base or bight portion 104 and two spaced leg portions 106, 108 which extend generally perpendicularly to the base portion and in the same direction from its opposite ends. The ends of the legs 106, 108 are identified with the reference numerals 110, 112 respectively, and an end portion 114 of the leg 106 is offset laterally outwardly from the remainder of the leg 106 by a distance equal to the inset depth D of the crimped vane lip 69 (see Figure 5) at the radially inner end 71 of each vane 38, and has a length W equal to the radial extent of such crimped lip. The legs 106, 108 join the base or bight portion 104 of the clip 102 by rounded clip portions 116, 118, respectively, each having a relatively large radius of curvature. The distance between the outer faces of the legs 106, 108 is substantially equal to the distance between the facing surfaces of the radially inner end portions 94 of adjacent pairs of stator vanes. Additionally, the ends 110, 112 of the clip legs are each spaced from the outer face of the base 104 of the clip 102 by a distance equal to the distance by which the inner ends 70 of the vanes project radially inwardly of the fastening strips 82.

Referring now to Figures 3—5, the retainer clips 102 are positioned between alternate adjacent pairs of the radially inwardly projecting ends 94 of the stator vanes, approximately midway between the leading edge and the trailing edge of the vane so that the outer surfaces of the legs of the clips contact the facing side surfaces of the vanes, the bases 104 of the clips contact the fastening strips 82 between the pairs of vanes, and the offset portions 114 of the legs 106 of the clips are received in the inset areas 69 of one of the radially inner ends 71 of each pair. With the clips 102 positioned in this manner, the end 110, 112 of each leg of the clip is aligned with one of the radially inner ends 71 of the vanes of the pair as can best be seen in Figure 5.

Each of the clips 102 is anchored to the inner shroud assembly 40 by means of spot welds 120 between the base 104 of the clip and the abutting fastening strip 82, an edge weld 121 extending along the aligned edges 71, 110 of the vane and the leg, and an edge weld 122 extending along the aligned edges 71, 112 of the vane and clip leg.

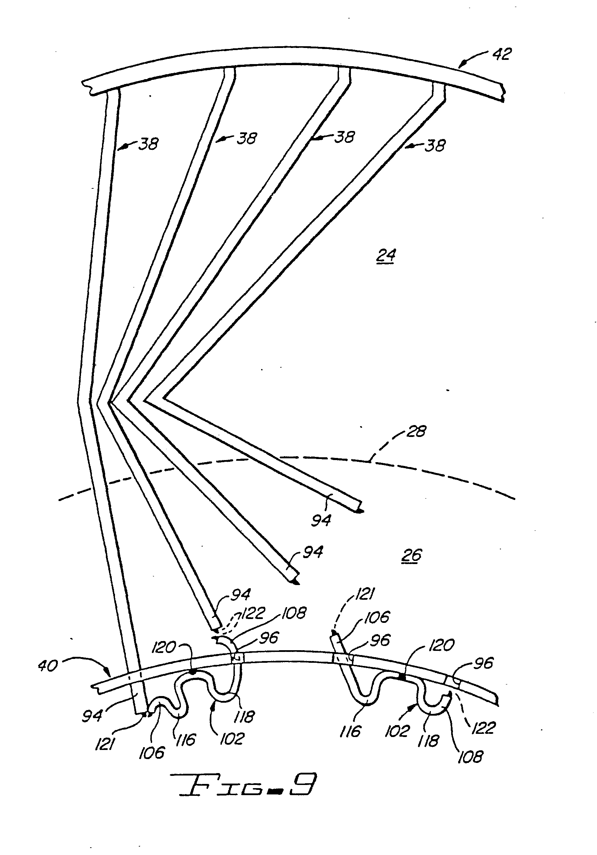

If there are an uneven number of vanes 38 in the stator vane assembly 34, an L-shaped half-clip 124 as shown in Figure 7 is used to secure the odd vane resiliently and releasably to the inner shroud assembly 40, as indicated in Figure 5, in a similar way. The clip 124 is similar to the right hand half of the clip 102 shown in Figure 6, having a base portion 104a slightly more than half as long as the base 104, and a straight leg 108a having an end 112a. The leg 108a is attached to the base 104a by a curved joining section 118a. The outer edge 112a of the clip 124 is secured to the inner end 71 of the odd vane (such as the vane 38 shown on the right in Figure 5) by an edge weld 112a, while the clip base 104a, which extends to the left as viewed in Figure 5 from the odd vane, is secured to the adjacent fastening member 82 on the left by spot welds 120a.

It should be noted that while it is preferable to use the U-clips 102 to fasten alternate pairs of adjacent vanes to the inner shroud assembly 40 as described above, the half-clips 124 could be used to secure each vane to the shroud assembly 40, if desired.

The use of retaining clips 102 and/or clips 124 as inner vane end connection members permits longitudinal thermal expansion and contraction of the vanes by amounts less than the amount which would result in breakage of the attachment 121 or 122, and a limited amount of transverse vane movement relative to the shroud 70, such relative movements of the vanes causing flexure of the retaining clips. This feature of the clip, in itself, represents a significant improvement over conventional methods of attaching the vanes to the shrouds. However, the retaining clips 102, 124 cooperate with the bendable, energy-absorbing vanes 38 in an even more important fashion if one or more of these vanes is struck by a foreign body such as the object 36 illustrated in Figure 1, ingested into the engine. As is well known, if an object is ingested into the engine it is given a very large tangential velocity (represented by the arrow 126 in Figures 2 and 8), by the rapidly spinning inlet fan 18. In conventional stator vane assemblies, the impact of such a body against a stator vane can cause one or more of three types of vane assembly damage — any one of which can, in turn, cause an unacceptable reduction in engine power subsequent to the impact.

First, one or more of the vanes may be shattered or torn loose, causing parts of the vane and/or of the shroud structure to be drawn through the core engine flow passage, thereby damaging the core engine's many rotating components.

Secondly, the impact may cause blockage of a substantial circumferential portion of the core flow passage entrance by deforming the inner support shroud and/or by causing the deformed vanes to pile up in front of the core passage entrance.

Thirdly, because of the ingested object's high tangential velocity component, a large number of vanes may be damaged, thereby severely reducing the overall flow-straightening capability of the stator vane assembly.

Each of these three known types of stator assembly damage which arise with a conventional stator is eliminated or at least substantially reduced by the improved stator assembly 34 of the present invention. In contrast to the first form of impact damage often suffered by conventional stator vane assemblies, when an ingested object strikes one of the vanes 38 of the improved stator assembly 34 with a tangential force component 126 (which is directed to the left as viewed in Figure 8) the vane which has been struck does not shatter. Because of its bendable, energy-absorbing construction the vane is merely bent to the left.

Moreover, the initially impacted vane 38 is not torn loose from the vane assembly 3. Instead, because the vane is releasably secured to the inner shroud assembly 40 with a connection the strength of which is substantially less than that of the outer shroud assembly 42, the vane is pulled out through its inner shroud slot 96 (and the corresponding slot 98 in the resilient strip 80) as it is being bent. The radially outer end of the initially impacted vane remains securely anchored to the outer shroud assembly 42. This initial withdrawal of the vane 38 from its shroud slot 96 caused by the impact is at first yieldingly resisted by the retaining clip 102 which is edge-welded to this vane. The ensuing deformation of the vane, and further withdrawal thereof from its shroud slot 96, moves the attached leg 108 of the clip radially outwardly, thereby deforming it in a manner which absorbs further kinetic energy from the ingested object and additionally causes the curvature of the portion 118 to reverse as shown in Figure 8 so that the leg 108 of the clip pivots away from the radially outwardly moving inner end portion 94 of the vane, turning about the edge weld 122. The resulting bending stress imposed on the edge weld 122 breaks the weld joint, thus freeing the bent vane's inner end portion from the leg 108 of the retaining clip. Such weld joint breakage may occur before the vane has been pulled completely out of its inner shroud slot 96 (as indicated in Figure 8), or after complete vane withdrawal (in which case the outer end of leg 108 of the clip is pulled right through the slot 96 before the edge weld 122 is broken).

The stator vane, now released from its radially inner connection, is then driven by the still-moving ingested object, into contact with the immediately adjacent vane (that is the vane to the left of the bent vane as seen in Figure 8) which up to this moment still passes normally through its inner shroud slot 96 and is edge-welded to the other leg 106 of the now partially deformed retaining clip 102. This further movement, and bending, of the released vane causes it to bend at its outer end where it is connected to the outer shroud assembly 42 and pivot in a clockwise direction about this outer end as shown in Figure 8.

When the first vane strikes the second vane, it does so with less force that that of the impact between the ingested object and the first vane because of the energy lost by the ingested object in bending the first vane, deforming the portions 108, 118, of the retaining clip, and breaking the edge weld joint 122 (see Figure 9). The second vane is thus similarly bent, although to a lesser degree, and moved transversely into the third vane with a still smaller force. During such bending and transverse movement of the second vane, it absorbs further energy from the ingested object, is pivoted in a clockwise direction, deforms the leg 106 of its attached clip as well as the joining portion 116 as previously described for the clip portions 108, 118, and is eventually released from the inner shroud assembly 40 after breaking the edge weld 121.

This process is repeated by subsequently contacted vanes until all of the ingested object's impact energy has been absorbed by the deformed vanes and their inner end retainer clips, which condition is schematically represented in Figure 9. It has been found in developing the stator vane assembly 34 that the unique cooperation between the energy-absorbing bendable vanes 38 and their deformable retaining clips 102 upon vane impact by an object ingested by the engine serves greatly to limit the total circumferential extent of vane damage compared to previously used stator vane assemblies utilizing deformable vanes. Typically, only a few of the vanes sustain damage. Because of this desirable feature of the present invention, the flow-straightening capability of the vane assembly 34 subsequent to vane impact is still quite high, and the ensuing engine power level is not unacceptably diminished.

While Figures 8 and 9 illustrate the use and function of the preferred U-shape clips 102, it should be noted that the L-shape clipe 124 function in precisely the same manner, whether such half-clips are used for the "odd" vane in an uneven-numbered array of vanes, or are used resiliently to connect the inner ends of all the vanes to the inner shroud assembly.

As far as the retaining clips are concerned, it should also be noted that the spaced positioning of their spot welds 120, 120a and their edge welds 121, 122 and 122a assures that the retaining clips remain securely fastened to the inner shroud assembly 40 even after they have become deformed and torn loose from the inner vane ends. This result is achieved by using the relatively large radius of curvature of the joining portions 116, 118, 118a of the clips, which ensures that these joining portions are inwardly deformed as the vanes are withdrawn, so that the edge welds are subjected to bending stress, and broken, while the spot welds on the bases of the retaining clips are stressed almost entirely only in shear and remain intact. This, in turn, substantially eliminates the possibility of the retaining clips (which are initially positioned entirely out of the inlet air flow path) becoming torn from the inner shroud assembly and drawn into the core flow passage 26.

Still another advantage is obtained by utilizing the structure described above because the vane-to-shroud retention strength is considerably less at the radially inner ends of the vanes than at their radially outer ends. Therefore, and also because removal of the vanes from the inner shroud member is not substantially hindered by the shroud member itself, the described withdrawal of the inner ends of a few of the vanes does not appreciably deform either of the shroud assemblies 40, 42 into the inlet passage and thereby cause blockage of one or both of the bypass and core flow passages 24, 26 as often occurs in conventional stator assemblies.

Moreover, the damaged vanes do not themselves cause an obstruction to the air flow in the core flow passage behind them. Instead, as shown in Figure 9, the radially inner end portions of the released vanes are automatically displaced radially outwardly away from the entrance to the core flow passage 26 and towards the entrance to the less critical bypass flow passage 24. It can also be seen in Figure 9 that even if the damaged vanes retained only at their outer ends were subsequently torn loose from the outer shroud assembly 42, they would, in all likelihood, merely be forced out through the bypass passage 24 and would not be drawn into the core flow passage 26.

In summary, the present invention provides an improved stator vane assembly which simultaneously eliminates or at least minimises the three major types of impact damage heretofore associated with conventional stator vane assemblies. The retaining clips for the radially inner ends of the vanes are quite inexpensive to produce and are quickly attachable to the stator assembly in the manner described, yet uniquely cooperate with the bendable, energy-absorbing stator vanes to afford the above-described advantages.

## Claims

1. A stator vane assembly comprising vane support means (70, 80, 82) having openings (96, 98) through each of which an end portion (94) of a stator vane (66) extends, and retaining means (102, 124) each attached to the support means (70, 80, 82) and to the projecting end portion (94) of a stator vane (66); the retaining means (102, 124) having a first portion (104, 104a) secured to the support means (82) by a first attachment (120, 120a), a second portion (106, 108, 108a) having an end aligned with and secured to the projecting end portion (94) of the stator vane (66) by a second attachment (121, 122, 122a), and a curved portion (116, 118, 118a) interconnecting the first and second portions; characterised in that the retaining means is resiliently flexible and its curved portion (116, 118, 118a) has a radius of curvature large in relation to its thickness; whereby the withdrawal of the projecting end portion (94) of the vane (66) through the opening (96, 98) is by deformation of the retaining means (102, 124) resulting in bending stress on and breakage of the second attachment (121, 122, 122a), the first attachment means (120, 120a) being subjected primarily to shear stress and being substantially undamaged thereby.

2. A stator vane assembly according to Claim 1, characterised in that the first and second portions (104, 106, 108, 104a, 108a) of the retaining means (102, 124) are orientated with respect to one another in such a way that the first portion (104, 104a) thereof extends generally transversely of the projecting end portion (94) of the vane (66) where it passes through said opening (96, 98) and the second portion (106; 108; 108a) extends generally parallel to the projecting end portion (94) of the vane (66) and away from the support means (70; 80; 82).

3. A stator vane assembly according to Claim 1 or Claim 2, characterised in that the means interconnecting the aligned ends (110; 112; 71; 112a) comprise a weld joint (121; 122; 122a) extending along the aligned ends.

4. A stator vane assembly according to any of Claims 1 to 3, characterised in that the first attachment means (120; 120a) comprise a weld joint formed between the support means (82) and the first portion (104; 104a) of the retaining means (102; 124).

5. A stator vane assembly according to any preceding Claim, characterised in that the retaining means comprise a bendable clip member (102; 124) having relatively inclined base (104; 104a) and leg (108; 108a) portions secured to the support means (82) and the projecting end portion (94) of the vane (66) respectively.

6. A stator vane assembly according to any preceding Claim, characterised in that there are a plurality of stator vanes (66) in an annular array extending between the said support means (70; 80; 82) which is positioned radially inwardly of the vanes (66) and a radially outer support (42) to which the vanes are fixed (at 56, 58, 60) more securely than the connection provided by the said retaining means (102; 124).

7. A stator vane assembly according to Claim 5 and Claim 6, characterised in that at least one of the clip members (124) is generally L-shape and/or at least one of the clip member (102) is generally U-shape.

8. A stator vane assembly as claimed in any preceding Claim, characterised in that the or each stator vane (66) has a bendable, hollow body filled with flexible, energy-absorbing material (68).

9. A turbofan engine characterised in that it includes an inlet stator vane assembly according to any preceding Claim.

## Patentansprüche

1. Leitschaufelanordnung mit einer Schaufelabstützvorrichtung (70, 80, 82), die Öffnungen aufweist (96, 98) durch die sich ein Endteil (94) einer Leitschaufel (66) erstreckt, und mit Haitevorrichtungen (102, 124), deren jede mit der Abstützvorrichtung (70, 80, 82) und mit dem vorstehenden Endteil (94) einer Leitschaufel (66) befestigt ist, wobei die Haltevorrichtungen (102, 124) einen ersten Teil (104, 104a), der mit der Abstützvorrichtung (82) über eine erste Befestigung (120, 120a) verbunden ist, einen zweiten Teil (106, 108, 108a), dessen eines Ende mit dem vorstehenden Endteil (94) der Leitschaufel (66) durch eine zweite Befestigung (121, 122, 122a) ausgerichtet und befestigt ist, und einen gekrümmten Teil (116, 118, 118a), der die ersten und die zweiten Teile miteinander verbindet, aufweist, dadurch gekennzeichnet, daß die Haltevorrichtung nachgiebig flexibel ausgebildet ist, und daß ihr gekrümmter Teil (116, 118, 118a) einen Krümmungsradius besitzt, der groß im Vergleich zur Dicke ist, wobei das Abziehen des vorstehenden Endteiles (94) der Schaufel (66) durch die Öffnung (96, 98) durch Deformieren der Haltevorrichtung (102, 124) erfolgt, was eine Biegebeanspruchung auf die und ein Brechen der zweiten Befestigung (121, 122, 122a) ergibt, während die erste Befestigungsvorrichtung (120, 120a) hauptsächlich einer Scherbeanspruchung ausgesetzt ist und dadurch im wesentlichen unbeschädigt bleibt.

2. Leitschaufelanordnung nach Anspruch 1, dadurch gekennzeichnet, daß die ersten und die zweiten Teile (104, 106, 108, 104a, 108a) der Haltevorrichtungen (102, 124) in Bezug aufeinander so orientiert sind, daß ihr erster Teil (104, 104a) sich etwa quer zu dem vorstehenden Endteil (94) der Schaufel (66) erstreckt, wo er durch die Öffnung (96, 98) greift, und der zweite Teil (106; 108; 108a) sich etwa parallel zu dem vorstehenden Endteil (94) der Schaufel (66) und von der Abstützvorrichtung (70; 80; 82) weg erstreckt.

3. Leitschaufelanordnung nach Anspruch 1 oder 2, dadurch gekennzeichnet, daß die Vorrichtung, die die ausgerichteten Enden (110; 112; 71; 112a) miteinander verbindet, eine Schweißverbindung (121; 122; 122a) aufweist, die längs der zueinander ausgerichteten Enden verläuft.

4. Leitschaufelanordnung nach einem der Ansprüche 1 bis 3, dadurch gekennzeichnet, daß die erste Befestigungsvorrichtung (120; 120a) eine Schweißverbindung aufweist, die zwischen der Abstützvorrichtung (82) und dem ersten Teil (104; 104a) der Haltevorrichtungen (102; 124) ausgebildet ist.

5. Leitschaufelanordnung nach einem der vorausgehenden Ansprüche, dadurch gekennzeichnet, daß die Haltevorrichtungen eine biegbares Klemmbauteil (102; 124) aufweisen, das relativ zueinander geneigte Basisteile (104; 104a) und Schenkelteile (108; 108a) besitzt, die mit der Abstützvorrichtung (82) und dem vorstehenden Endteil (94) der Schaufel (66) befestigt sind.

6. Leitschaufelanordnung nach einem der vorausgehenden Ansprüche, dadurch gekennzeichnet, daß eine Vielzahl von Leitschaufeln (66) in einer Ringanordnung vorgesehen sind, die sich zwischen der Abstützvorrichtung (70; 80; 82), welche radial innerhalb der Schaufeln (66) positioniert ist, und einer radial äußeren Abstützung (42) erstrecken, mit der die Schaufeln auf festere Weise als die durch die Haltevorrichtungen (102; 124) erzielte Verbindung befestigt (bei 56, 58, 60) sind.

7. Leitschaufelanordnung nach Anspruch 5 und Anspruch 6, dadurch gekennzeichnet, daß mindestens eines der Klemmbauteile (124) etwa L-Form besitzt und/oder mindestens eines der Klemmbauteile (102) U-Form hat.

8. Leitschaufelanordnung nach einem der vorausgehenden Ansprüche, dadurch gekennzeichnet, daß die oder jede Leitschaufel (66) einen biegsamen, hohlen Körper aufweist, der mit flexiblem, Energie absorbierendem Material (68) gefüllt ist.

9. Turbomaschine, dadurch gekennzeichnet, daß sie eine Leitschaufelanordnung nach einem der vorausgehenden Ansprüche aufweist.

**Revendications**

1. Ensemble d'ailettes statoriques comprenant des éléments porteurs d'ailettes (70, 80, 82), qui présentent des ouvertures (96, 98) à travers chacune desquelles s'étend une partie d'extrémité (94) d'une ailette de stator (66), et des éléments de retenue (102, 124) fixés chacun aux éléments porteurs (70, 80, 82) et à la partie d'extrémité saillante (94) d'une ailette de stator (66); les éléments de retenue (102, 124) comportant une première partie (104, 104a) fixée aux éléments porteurs (82) par une première attache (120, 120a), une deuxième partie (106, 108, 108a) présentant une extrémité alignée avec la partie d'extrémité saillante (94) de l'ailette de stator (66) et fixée à cette partie par une deuxième attache (121, 122, 122a), et une partie courbe (116, 118, 118a) interconnectant les première et deuxième parties; caractérisé en ce que l'élément de retenue est élastiquement flexible et sa partie courbe (116, 118, 118a) a un rayon de courbure grand par rapport à son épaisseur; de sorte que le retrait de la partie d'extrémité saillante (94) de l'ailette (66) à travers l'ouverture (96, 98) engendre, par déformation de l'élément de retenue (102, 124), un effort de pliage et une cassure de la deuxième attache (121, 122, 122a), la première attache (120, 120a) étant soumise principalement à un effort de cisaillement et étant ainsi sensiblement non endommagée.

2. Ensemble d'ailettes statoriques suivant la revendication 1, caractérisé en ce que les première et deuxième parties (104, 106, 108, 104a, 108a) des éléments de retenue (102, 124) sont orientées l'une par rapport à l'autre d'une manière telle que la première partie (104, 104a) s'étend sensiblement transversalement à la partie d'extrémité saillante (94) de l'ailette (66), à l'endroit où elle traverse ladite ouverture (96, 98), et la deuxième partie (106; 108; 108a) s'étend sensiblement parallèlement à la partie d'extrémité saillante (94) de l'ailette (66) et à l'opposé des éléments porteurs (70; 80; 82).

3. Ensemble d'ailettes statoriques suivant la revendication 1 ou la revendication 2, caractérisé en ce que les moyens interconnectant les extrémités alignées (110; 112; 71; 112a) comprennent une soudure (121; 122; 122a) s'étendant le long des extrémités alignées.

4. Ensemble d'ailettes statoriques suivant l'une quelconque des revendications 1 à 3, caractérisé en ce que la première attache (120; 120a) comprend une soudure formée entre les éléments porteurs (82) et la première partie (104; 104a) des éléments de retenue (102; 124).

5. Ensemble d'ailettes statoriques suivant l'une quelconque des revendications précédentes, caractérisé en ce que les éléments de retenue comprennent une agrafe pliable (102; 124) comportant des parties de base (104; 104a) et d'ailes (108; 108a) inclinées les unes par rapport aux autres, fixées aux éléments porteurs (82) et à la partie d'extrémité saillante (94) de l'ailette (66) respectivement.

6. Ensemble d'ailettes statoriques suivant l'une quelconque des revendications précédentes, caractérisé en ce qu'il y a une pluralité d'ailettes statoriques (66) dans un agencement annulaire s'étendant entre lesdits éléments porteurs (70; 80; 82), qui sont situés radialement vers l'intérieur des ailettes (66), et un support radialement extérieur (42) auquel les ailettes sont fixées (en 56, 58, 60) plus solidement que la liaison procurée par lesdits éléments de retenue (102; 124).

7. Ensemble d'ailettes statoriques suivant la revendication 5 et la revendication 6, caractérisé en ce qu'au moins une des agrafes (124) est sensiblement en forme de L et/ou au moins une des agrafes (102) est sensiblement en forme de U.

8. Ensemble d'ailettes statoriques suivant l'une quelconque des revendications précédentes, caractérisé en ce que la ou chaque ailette statorique (66) comprend un corps creux pliable rempli d'une matière flexible d'absorption d'énergie (68).

9. Moteur à turbosoufflante, caractérisé en ce qu'il comprend un ensemble d'ailettes statoriques d'entrée suivant une quelconque des revendications précédentes.

Fig-1

0 079 216

FIG. 2

2

Fig-3

0 079 216

FIG-5

0 079 216

FIG-6

FIG-7

FIG-4

FIG. 8

FIG-9